# FASCICULE DE BREVET EUROPEEN

(11) **EP 4 016 382 B1**
(45) Date de publication et mention de la délivrance du brevet: **03.12.2025**
(21) Numéro de dépôt: 21214832.4
(22) Date de dépôt: 15.12.2021
(51) Int. Cl.: G06V 20/20

(54) **PROCÉDÉ POUR LA CONFIGURATION ET L' AFFICHAGE EN RÉALITÉ AUGMENTÉE OU MIXTE OU ÉTENDUE DES INFORMATIONS RELATIVES À UN ÉQUIPEMENT INSTALLÉ DANS UN SITE RÉEL, PRODUIT PROGRAMME D ORDINATEUR ET DISPOSITIF ÉLECTRONIQUE ASSOCIÉS**
VERFAHREN ZUR KONFIGURATION UND ANZEIGE IN AUGMENTED- ODER MIXED- ODER EXTENDED-REALITY VON INFORMATION ÜBER EINE AN EINEM REALEN ORT INSTALLIERTE AUSRÜSTUNG, ENTSPRECHENDES COMPUTERPROGRAMMPRODUKT UND ELEKTRONISCHES GERÄT
METHOD FOR CONFIGURING AND DISPLAYING, IN AUGMENTED, MIXED OR EXTENDED REALITY, INFORMATION RELATING TO A DEVICE INSTALLED ON A REAL SITE, ASSOCIATED COMPUTER PROGRAM PRODUCT AND ELECTRONIC DEVICE

(30) Priorité: 16.12.2020 FR 2013372
(43) Date de publication de la demande: 22.06.2022
(73) Titulaire: Schneider Electric Industries SAS, 92500 Rueil-Malmaison (FR)
(72) Inventeur: CHICHE, Thierry, 38330 SAINT ISMIER (FR); GASSION, Romain, 38140 IZEAUX (FR); MEFTAH, Tewfik, 38100 GRENOBLE (FR); NEYRET, Yannick, 38330 BIVIERS (FR)
(74) Mandataire: Lavoix

(56) Documents cités:
- EP-A1- 3 159 813
- FR-A1- 2 990 286
- OOI WEI TSANG ET AL: "Content first : a concept for industrial augmented reality maintenance applications using mobile devices", 18 March 2015 (2015-03-18), New York, NY, USA, pages 105 - 111, XP055832797, Retrieved from the Internet <URL:https://dl.acm.org/doi/pdf/10.1145/2713168.2713169> DOI: 10.1145/2713168.2713169
- ZHU J. ET AL: "An authorable context-aware augmented reality system to assist the maintenance technicians", 1 January 2013 (2013-01-01), London, XP055832772, ISSN: 0268-3768, Retrieved from the Internet <URL:https://link.springer.com/content/pdf/10.1007/s00170-012-4451-2.pdf> DOI: 10.1007/s00170-012-4451-2
- WANG JUNFENG ET AL: "An augmented reality based system for remote collaborative maintenance instruction of complex products", 2014 IEEE INTERNATIONAL CONFERENCE ON AUTOMATION SCIENCE AND ENGINEERING (CASE), IEEE, 18 August 2014 (2014-08-18), pages 309 - 314, XP032669817, DOI: 10.1109/COASE.2014.6899343

## Description

La présente invention concerne un procédé pour la configuration et l'affichage en réalité augmentée ou mixte ou étendue, des informations relatives à un équipement installé dans un site réel, un produit programme d'ordinateur et un dispositif électronique associés.

Le procédé, le produit programme d'ordinateur et le dispositif électronique selon la présente invention seront décrits en faisant ici une référence spécifique à la réalité augmentée ou RA (de l'anglais « augmented reality » ou « AR »). Toutefois, cette référence ne doit pas être considérée comme limitant la possibilité d'appliquer le procédé, le produit programme d'ordinateur et le dispositif électronique selon l'invention à des autres types de réalités immersives, notamment à la réalité mixte (de l'anglais « Mixed Reality » ou « MR ») et à la réalité étendue (de l'anglais « Extended Reality » ou « XR »).

La réalité augmentée est aujourd'hui bien utilisée dans plusieurs domaines techniques, par exemple pour faciliter le diagnostic et la maintenance des machines industrielles.

En particulier, la configuration d'une machine industrielle en réalité augmentée permet d'afficher sur l'écran d'un dispositif électronique portable, une image enrichie de la machine à laquelle sont associées des informations relatives à la même machine.

Les informations peuvent être accédées au moyen d'un ou plusieurs point(s) d'intérêt (de l'anglais « Point Of Interest » ou « POI »), qui sont préconfigurés pour être liés directement aux informations pertinentes et, pendant le déclenchement d'une application RA, ils sont superposés à l'image de l'équipement affichée sur l'écran du dispositif électronique portable.

De cette façon, les opérateurs qui doivent intervenir sur un équipement installé ont partout à leur disposition les informations nécessaires propres à l'équipement, comme par exemple des schémas électriques, des manuels d'interventions, des vidéos, des tutoriels, et cetera.

Par conséquent, les parties de l'équipement sur lesquelles on doit intervenir sont identifiés plus précisément et de manière plus rapide, les temps consacrés à l'intervention, à la recherche de documents, et à la maintenance sont réduits, les erreurs humaines sont diminuées.

Toutefois, même si l'utilisation de la réalité augmentée offre plusieurs avantages, il existe encore des aspects susceptibles d'être améliorés.

En particulier, lors de la configuration d'une application RA sur un dispositif technique, il faut aujourd'hui définir manuellement chaque point d'intérêt et ses informations spécifiques, comme par exemple les liens vers la documentation technique, les liens vers les schémas techniques, les liens vers le guide utilisateur, les liens vers la liste de questions fréquemment posées ou FAQ (de l'anglais « Frequently Asked Questions »), le lien vers le site Web du fabricant, et cetera.

Il s'agit donc d'un processus très long qui demande l'exécution de plusieurs étapes, comme par exemple lister tous les liens de documentation vers l'équipement, lire manuellement et répertorier les parties pertinentes identifiées / référencées de l'équipement dans le document, créer manuellement chaque POI avec des liens directs vers la documentation correspondante.

En outre, quand un POI préconfiguré est sélectionné, l'accès aux informations liées peut être imprécis parce que le lien associé ouvre le document à la première page et non à l'endroit exact du document où se trouve l'information pertinente.

De cette façon, un utilisateur doit commencer sa propre recherche pour repérer l'information technique nécessaire, ce qui peut être difficile, causer des erreurs et nécessiter beaucoup de temps.

Enfin, il y a également la possibilité que les données RA soient incohérentes lorsque des modifications ont été apportées dans certaines documents, et en particulier dans des diagrammes techniques.

Le document publié « Content first : a concept for industrial augmented reality maintenance applications using mobile devices » divulgue une application personnalisable permettant d'utiliser des techniques de réalité augmentée et virtuelle pour aider les techniciens dans leurs tâches de maintenance quotidiennes. Afin de rendre la documentation plus pratique pour les utilisateurs, une description où les informations détaillées, la vue d'ensemble et la description des tâches sont présentées en même temps.

Le document EP 3 159 813 A1 divulgue un procédé de gestion des ressources WEB mémorisées dans un ou plusieurs serveurs informatiques associés à une machine.

Le document publié Zhu J. et Al. « An authorable content-aware augmented reality system to assist the maintenance technicians » divulgue un système de réalité augmentée adapté au contexte pour aider des techniciens de maintenance. A cet effet, il est proposé un outil de création bidirectionnel, qui permet aux développeurs de réalité augmentée de créer des informations contextuelles via une interface utilisateur 2D de bureau et aux techniciens de maintenance de créer des contenus de réalité augmentée sur site.

Le document FR 2 990 286 A1 divulgue un procédé d'affichage en réalité augmentée d'une information relative à un équipement cible sur un écran d'un dispositif électronique.

Le but de l'invention est de proposer une solution répondant au moins partiellement à ces problématiques, et en particulier une solution qui permet une identification des informations pertinentes plus aisé et rapide par rapport aux solutions connues.

Ce but est atteint par un procédé pour la configuration et l'affichage en réalité augmentée ou mixte ou étendue des informations relatives à au moins un équipement installé dans un site réel, le procédé comportant au moins les étapes suivantes :
(a) : construire une base de données comprenant une pluralité de documents qui portent des informations relatives à l'équipement, dans laquelle chaque document ou chaque partie sélectionnée d'un document inclus dans la base de données est associé(e) à au moins une étiquette électronique correspondante qui contient une adresse renvoyant vers le document ou vers la partie sélectionnée du document lui associé(e) ;
(b) : identifier de manière univoque l'équipement installé dans le site réel ;
(c) : associer l'équipement ainsi identifié à au moins une étiquette électronique associée à un document ou à une partie sélectionnée d'un document ;
(d) : créer un ou plusieurs premier(s) point(s) d'intérêt lié(s) à au moins une étiquette électronique, chaque premier point d'intérêt étant configuré pour être superposé sur un premier document ou sur une première partie sélectionnée d'un document correspondant ; le procédé étant caractérisé en ce qu'il comporte en outre les étapes suivantes :
(e) : créer un ou plusieurs deuxième(s) point(s) d'intérêt à afficher superposé(s) directement sur l'équipement installé dans le site réel ; et
(f) : associer un deuxième point d'intérêt à au moins un premier point d'intérêt.

Selon d'autres aspects avantageux de l'invention, un tel procédé peut comprendre une ou plusieurs des caractéristique suivantes, prises isolément ou selon toute combinaison techniquement admissible :
- une étape ultérieure (g) consistant à associer au moins un premier point d'intérêt à un ou plusieurs premier(s) point(s) d'intérêt additionnel(s), chaque premier point d'intérêt additionnel étant lié à, et configuré pour, être superposé sur un deuxième document différent du premier document ou sur une deuxième partie du premier document différente de la première partie ;
- l'étape (g) consistant à associer au moins un premier point d'intérêt à un ou plusieurs premier(s) point(s) d'intérêt additionnel(s) comporte le fait d'associer de façon automatique au moyen d'un premier module logiciel chaque premier point d'intérêt sélectionné à un ou plusieurs premier(s) point(s) d'intérêt additionnel(s) ;
- l'étape (g) consistant à associer au moins un premier point d'intérêt à un ou plusieurs premier(s) point(s) d'intérêt additionnel(s) comporte les sous-étapes suivantes :
- (g.1) : générer une liste des premiers points d'intérêt créés ;
- (g.2) : sélectionner dans la liste générée un premier point d'intérêt et lui associer manuellement un ou plusieurs premier(s) point(s) d'intérêt additionnel(s) ;
- l'étape (b) consistant à identifier de manière univoque l'équipement installé dans le site réel comporte le fait de détecter au moins un marqueur apposé sur l'équipement, le marqueur identifiant de manière univoque l'équipement sur lequel il est apposé ;
- une étape (h) consistant à sauvegarder les résultats obtenus au moins à la fin de l'étape consistant à associer un deuxième point d'intérêt à au moins un premier point d'intérêt ;
- une étape (j) consistant à afficher sur un écran d'un dispositif électronique utilisé par un operateur intervenant sur le site réel où l'équipement est installé, au moins un premier document ou une première partie sélectionnée d'un premier document;
- une étape (k) consistant à sélectionner manuellement sur l'écran un premier point d'intérêt superposé sur le premier document ou sur la première partie sélectionnée du premier document;
- une étape (l) consistant à projeter directement sur l'équipement, au moyen du dispositif électronique, au moins un deuxième point d'intérêt qui est lié de manière univoque au premier point d'intérêt sélectionné ;
- une étape (m) consistant à projeter sur une surface du site réel une image tridimensionnelle en réalité augmentée du premier document ou de la première partie sélectionnée du premier document affiché(e) sur l'écran du dispositif électronique ;
- l'étape (a) consistant à construire une base de données comporte au moins la sous-étape suivante :
- (a.1) : sélectionner pour chaque document ou chaque partie sélectionnée d'un document un élément d'identification apposé sur ce document, qui identifie de manière univoque le document ou la partie sélectionnée du document correspondant(e) ;
- la sous-étape (a.1) consistant à sélectionner pour chaque document ou chaque partie sélectionnée d'un document un élément d'identification comporte le fait d'analyser, de façon automatique, chaque document ou chaque partie sélectionnée d'un document au moyen d'un module logiciel d'intelligence artificielle à apprentissage profond ou à apprentissage machine ;
- pendant l'étape (b), le fait de détecter au moins un marqueur apposé sur l'équipement comporte le fait d'identifier au moins une image au moyen d'un système optique de reconnaissance d'images ;
- pendant l'étape (b), le fait de détecter au moins un marqueur apposé sur l'équipement comporte le fait d'identifier au moins une inscription textuelle avec un système optique de reconnaissance de caractères ;
- l'étape (c) consistant à associer l'équipement identifié à au moins une étiquette électronique comporte le fait d'associer automatiquement l'équipement à une ou plusieurs étiquette(s) électronique(s) au moyen d'un module logiciel installé dans un dispositif électronique ;
- l'étape (c) consistant à associer l'équipement identifié à au moins une étiquette électronique comporte le fait d'associer manuellement l'équipement à une ou plusieurs étiquette(s) électronique(s) ;
- le marqueur apposé sur l'équipement inclut des coordonnées indicatives de la position d'installation de l'équipement dans le site réel, le marqueur étant un élément sélectionné parmi le groupe comprenant un code QR, une étiquette RFID et un code à barres.

En outre, le but susmentionné de la présente invention est également atteint par un produit programme d'ordinateur comportant des instructions logicielles qui, lorsque mises en œuvre par une unité de traitement d'informations intégrée à un dispositif électronique met en œuvre un procédé pour la configuration et l'affichage en réalité augmentée ou mixte ou étendue des informations relatives à au moins un équipement installé dans un site réel, tel que mentionné ci-dessus.

En outre, le but susmentionné de la présente invention est également atteint par un dispositif électronique caractérisé en ce qu'il est configuré pour mettre en œuvre un procédé pour la configuration et l'affichage en réalité augmentée ou mixte ou étendue des informations relatives à au moins un équipement installé dans un site réel, tel que mentionné ci-dessus.

D'autres aspects et avantages de l'invention apparaîtront à la lecture de la description qui suit, donnée uniquement à titre d'exemple et faite en référence aux dessins annexés, parmi lesquels :
[FIG. 1] la Figure 1 est un organigramme illustrant schématiquement un procédé de configuration selon l'invention ;
[FIG. 2] la Figure 2 est une représentation schématique d'un équipement, en l'espèce une armoire électrique, installé dans un site réel avec des dispositifs électroniques utilisés selon l'invention;
[FIG. 3] la Figure 3 est une vue représentant une image de l'équipement affichée sur l'écran d'un dispositif électronique lors de la mise en œuvre du procédé selon l'invention ;
[FIG. 4] la Figure 4 est une vue représentant l'ensemble de l'équipement installé dans le site réel avec un document affiché sur l'écran d'un dispositif électronique et une image enrichie en réalité augmentée projetée sur un mur du site d'installation lors de la mise en œuvre du procédé selon l'invention.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" ou terme similaire est utilisé ici en se référant à tout composant dans son ensemble, ou à toute partie d'un composant, ou à une combinaison de composants, il doit être compris que cela signifie et englobe la structure et/ou la configuration et/ou la forme et/ou le positionnement du composant ou de la partie que ce terme désigne.

En particulier, par rapport à des moyens/modules électroniques et/ou logiciels, chacun des termes indiqués ci-dessus englobe les circuits électroniques, ainsi que des codes logiciels et/ou des algorithmes ou des programmes complets stockés ou en cours d'exécution.

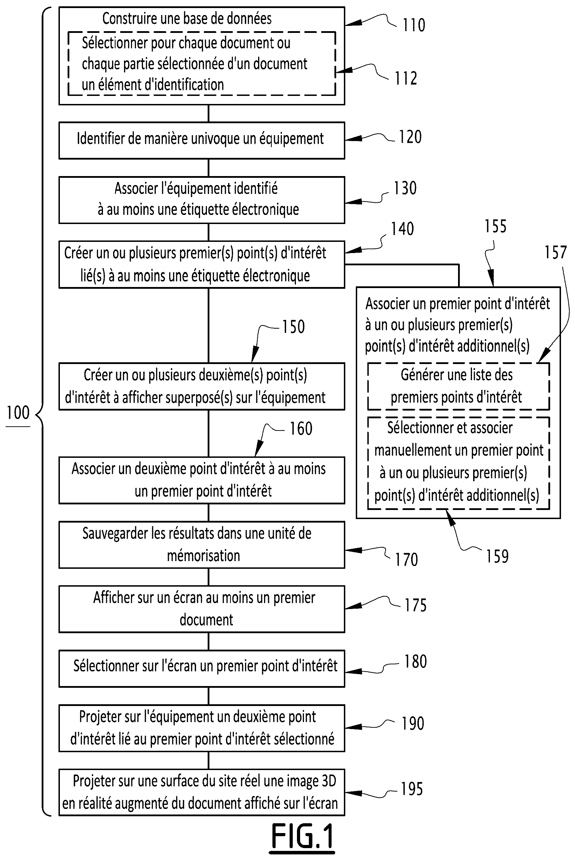

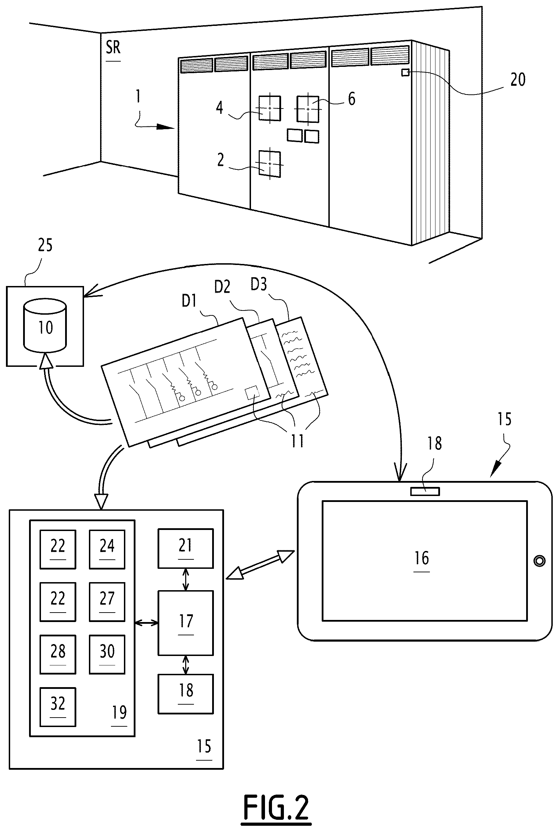

La figure 1 est un organigramme illustrant schématiquement un procédé 100 pour la configuration et l'affichage en réalité augmentée ou mixte ou étendue des informations relatives à au moins un équipement, indiqué sur la figure 2 avec le numéro de référence 1.

En particulier, dans l'exemple illustré sur la figure 2, l'équipement installé dans le site réel SR est une armoire électrique 1 comprenant plusieurs parties ou composants disposés dans l'armoire 1, comme par exemple une pluralité d'appareils électriques 2, 4 et 6, tels que des disjoncteurs.

Dans tout cas, le terme équipement ne doit pas être considéré de manière limitative, et l'équipement 1 peut être un dispositif quelconque considéré seul ou une machine quelconque considérée seule ou un ensemble de dispositifs, de machines ou de composants.

Comme illustré sur la figure 1, le procédé 100 selon l'invention comporte une première étape 110 consistant à construire une base de données, indiquée sur la figure 2 par le numéro de référence 10, cette base de données 10 comprenant une pluralité de documents D1, D2, D3... qui portent des informations relatives à l'équipement 1.

En particulier, chaque document ou chaque partie sélectionnée d'un document inclus dans la base de données 10 est associé(e), préférablement de manière univoque, à une étiquette électronique correspondante, alors que chaque étiquette électronique contient une adresse renvoyant vers les informations portées par le document ou par la partie sélectionnée du document lui associé(e).

De cette façon, même si le document pertinent est un document comprenant plusieurs pages, les étiquettes électroniques sont adressées directement à la partie pertinente correspondante de ce document et non seulement au début d'un document.

Cette association peut être réalisé par exemple au moyen d'un premier module logiciel installé sur un dispositif électronique.

De préférence, un tel dispositif électronique est un dispositif ou terminal électronique portable configuré pour jouer en réalité augmentée, tel qu'un téléphone portable, par exemple un téléphone multifonction (en anglais « smartphone »), autrement dit « terminal de poche » ou « ordiphone », une tablette électronique (en anglais « pad »), ou un dispositif similaire.

Dans l'exemple illustré sur la figure 2, le dispositif électronique est schématiquement représenté sous la forme d'une tablette électronique 15 et comporte un écran 16, une unité de traitement d'informations 17, un appareil photo et/ou vidéo 18 pour capteur des images et / ou filmer les objets situés dans le monde réel et afficher les images correspondantes sur l'écran 16, au moins une unité de mémorisation de données 19, et des moyens de communication 21 à l'extérieur, par exemple sans fils. A la figure 2, la tablette électronique est représentée en double, pour montrer, sur la droite, sa structure vue de l'extérieur et, sur la gauche, ses composants internes. La double flèche entre ces deux représentations explicite le fait qu'il s'agit du même objet, représenté de deux façons.

Selon l'exemple illustré sur la figure 2, le premier module logiciel, indiqué schématiquement avec le numéro de référence 22, est installé dans le dispositif électronique 15 et contient des instructions logicielles destinées à être exécutées par l'unité de traitement d'informations 17.

Selon une forme possible de réalisation, les documents D1, D2, D3... sélectionnés pour être inclus dans la base de données 10, comportent par exemple au moins une pluralité des diagrammes électriques, et/ou mécaniques et/ou de communication relatifs à l'équipement 1 ou à un ou plusieurs de ses composants, comme par exemple les appareils électriques 2, 4 et 6.

Dans tous les cas, le terme « document » doit être interprété ici dans le sens le plus large et peut donc être considéré comme incluant des documents physiques ainsi que des documents numériques et contenant des données de nature textuelle, graphique, audio, vidéo.

En particulier, comme l'homme du métier peut aisément comprendre, en fonction de l'application spécifique, ces documents D1, D2, D3 peuvent être de tout type possible et peuvent porter des informations également de tout type possible, par exemple un manuel d'utilisation, un manuel d'instructions, une archive portant des données relatives à l'équipement et/ou à ses composants, comme par exemple un schéma électrique représentant l'installation et la façon dont les équipements ou les composant d'un équipement sont connectés entre eux, une liste de FAQ, une séquence vidéo, un sinoptique d'un ecran de supervision, et cetera.

Selon une forme possible de réalisation, l'étape 110 consistant à construire une base de données 10 comporte au moins la sous-étape 112 consistant à sélectionner pour chaque document ou chaque partie sélectionnée d'un document un élément d'identification apposé sur ce document.

Chaque élément d'identification, indiqué schématiquement sur la figure 1 avec le même numéro de référence 11 pour tous les documents D1, D2 et D3 représentés, identifie de manière univoque le document ou la partie sélectionnée du document correspondant(e).

En particulier, la sous-étape 112 comporte le fait d'analyser de façon automatique chaque document ou chaque partie sélectionnée d'un document au moyen du premier module logiciel 22, ou d'un outre module configuré à cet effet, en particulier d'un module logiciel d'intelligence artificielle à apprentissage profond (de l'anglais « deep learning ») ou à apprentissage machine (« machine learning »).

L'élément d'identification 11 peut être par exemple un code, tel qu'un code matriciel ou « QR code » en anglais, une étiquette RFID, un code à barres, un texte, une combinaison alphanumérique, un symbole technique et/ou graphique, une icône, une image, une étiquette électronique, une position géographique, comme par exemple des cordonnées GPS, une position indiquée en cordonnées XYZ dans un repère identifié, une forme reconnue par un algorithme d'intelligence artificielle, et cetera.

En outre, l'élément d'identification 11 peut être un élément déjà apposé sur chaque document D1, D2, D3 ou partie du document pertinente, ou il peut être apposé exprès pendant l'exécution du procédé 100 selon l'invention.

En outre, selon une forme possible de réalisation, la base de données 10 utilisée dans le procédé 100 peut être une base de données déjà existante, au moins partiellement, pour des besoins autres que la RA, et le même identifiant peut être est utilisé dans plusieures vues, par exemple vues electriques ou mécaniques ou 3D, et cetera.

Le procédé 100 selon l'invention comporte en outre une deuxième étape 120 consistant à identifier de manière univoque l'équipement 1 installé dans le site réel SR.

Selon un mode possible de réalisation, l'étape 120 consistant à identifier de manière univoque l'équipement 1 installé dans le site réel SR comporte le fait de
détecter au moins un marqueur, repéré sur la figure 2 avec le numéro de référence 20, qui est apposé sur l'équipement 1 et qui permet d'identifier de manière univoque l'équipement 1 sur lequel il est apposé.

Selon un mode possible de réalisation, le marqueur 20 apposé sur l'équipement 1 inclut des coordonnées indicatives de la position où l'équipement 1 est installé dans le site réel SR.

Ce marqueur 20 est, par exemple, un marqueur sélectionné parmi le groupe comprenant un code matriciel ou QR code, une étiquette RFID, un code à barres, un texte, une combinaison alphanumérique, un symbole technique et/ou graphique, une icône, une image, une étiquette électronique, une position géographique, comme par exemple des cordonnées GPS, une position indiquée en cordonnées XYZ dans un repère identifié, une forme reconnue par un algorithme d'intelligence artificielle, et cetera.

La deuxième étape 120 peut être réalisée selon n'importe quelle séquence par rapport à la première étape 110, et les deux étapes 110 et 120 peuvent être réalisées concomitamment ou à des moments différents.

Selon une forme possible de réalisation, l'étape 120 comporte le fait d'identifier une ou plusieurs image(s) apposées sur l'équipement 1 au moyen d'un système optique de reconnaissance d'images (de l'anglais « optical image recognition system »). Ces images forment également des marqueurs 20 de l'équipement 1.

Selon une autre forme possible, cet étape 120 comporte l'identification d'une ou plusieurs inscription(s) textuelle(s) apposée(s) sur l'équipement 1 utilisant un système de reconnaissance optique de caractères ou ROC (de l'anglais « OCR » ou « Optical Characters Recognition »). Ces inscriptions textuelles forment également des marqueurs 20 de l'équipement 1.

Par exemple, le système optique de reconnaissance d'images et/ou le système optique de reconnaissance de caractères peuvent être installés sur le dispositif électronique 15, comme représenté sur la figure 2 sur laquelle ils sont indiqués avec les numéros de référence 24 et respectivement 26.

Clairement, il est possible d'utiliser les deux systèmes 24 et 26 en combinaison, et/ou d'utiliser des autres systèmes ou procédés d'identification, comme par exemple des systèmes de géolocalisation, des systèmes d'identification 3D, et cetera.

Le procédé 100 selon l'invention comporte en outre au moins une troisième étape 130 consistant à associer l'équipement 1 ainsi identifié au moyen du marqueur 20 pendant la deuxième étape 120, à au moins une des étiquettes électroniques qui ont étés associées de manière univoque pendant l'étape 110 à un document D1, D2, D3 ou à une partie sélectionnée d'un document.

Selon un mode de réalisation possible, l'étape 130 comporte le fait d'associer automatiquement l'équipement 1 à une ou plusieurs étiquette(s) électronique(s) au moyen d'un deuxième module logiciel incluant des instructions logicielles proprement configurées à cet effet.

Ce deuxième module logiciel est par exemple également installé dans le dispositif électronique 15, comme illustré sur la figure 2 où il est repéré avec le numéro de référence 28.

Selon un autre mode de réalisation possible, l'étape 130 consistant à associer l'équipement 1 identifié à au moins une étiquette électronique comporte le fait d'associer manuellement l'équipement 1 à une ou plusieurs des étiquette(s) électronique(s).

Cette association manuelle peut être réalisée directement sur l'écran 16 à l'aide du module logiciel 28 ou en utilisant un autre module logiciel proprement configuré à cet effet.

Le procédé 100 selon l'invention comporte, en outre, au moins :
- une quatrième étape 140 consistant à créer un ou plusieurs premier(s) point(s) d'intérêt P1, dans lequel chaque premier point d'intérêt P1 est lié à au moins une étiquette électronique et est configuré pour être superposé sur un premier document D1, ou D2 ou D3, ou sur une première partie sélectionnée d'un document correspondant(e) auquel(le) l'étiquette électronique est associée;
- une cinquième étape 150 consistant à créer un ou plusieurs deuxième(s) point(s) d'intérêt P2 destiné(s) à être affiché(s) et superposé(s) en réalité augmentée directement sur l'équipement 1 installé dans le site réel SR, par exemple pendant une intervention d'un operateur sur le site SR qui déclenche une application RA pour accéder aux informations relatives à l'équipement 1 ; et
- une sixième étape 160 consistant à associer, de façon bidirectionnelle, chaque deuxième point d'intérêt P2 à au moins un premier point d'intérêt P1.

Les premiers et deuxième points d'intérêt P1 et P2 sont en pratique des composants d'interface graphique, c'est à dire des composants de type "widget", et peuvent prendre la forme d'un texte, de données, d'un symbole, d'une icône, ou d'un menu contextuel, et cetera.

La quatrième étape 140, la cinquième étape 150 et la sixième étape 160 sont réalisées, par exemple, au moyen d'un troisième module logiciel incluant des instructions logicielles à cet effet et qui est installé par exemple sur le même dispositif électronique 15, comme représenté dans l'exemple de la figure 2 où le troisième module logiciel est repéré avec le numéro de référence 30.

En pratique, pendant l'exécution des étapes 140 et 150, le troisième module logiciel 30 définit au moins la forme graphique de chaque point d'intérêt, les liens aux étiquettes et, le cas échéant, les liens à des autres points d'intérêt.

La quatrième étape 140 peut être réalisée selon n'importe quelle séquence par rapport à la cinquième étape 150, et les deux étapes 140 et 150 peuvent être réalisées concomitamment ou à des moments différents.

Selon un mode de réalisation possible, le procédé 100 comprend, en outre, une étape 155 consistant à associer au moins un premier point d'intérêt P1 à un ou plusieurs premier(s) point(s) d'intérêt additionnel(s) P1', chaque premier point d'intérêt additionnel P1' étant lié à, et étant configuré pour, être superposé sur un deuxième document différent du premier document ou sur une deuxième partie du premier document différente de la première partie.

De cette façon, une liaison ramifiée entre points d'intérêt P1 est avantageusement créée. Ainsi, quand un opérateur sélectionne un premier point d'intérêt P1 et accède aux informations portées par le document ou par une partie sélectionnée de ce document qui lui est associé(e), si ces informations sont liées à d'autres informations portées par un autre document et qui doivent être consultées, l'opérateur est guidé de manière précise vers ces autres informations et peut rapidement et directement y accéder.

Selon un mode de réalisation possible, les informations ramifiées peuvent être organisées selon des critères de hiérarchisation/priorisation permettant de retrouver plus rapidement les informations les plus pertinentes. Par exemple, les ramifications peuvent être organisées et accédées en fonction du type et du contenu des informations portées, par exemple électriques, mécaniques, électroniques matériels et/ou logiciels, et/ou en fonction de l'identification des utilisateurs ou de leurs profils.

Selon un mode de réalisation possible, l'étape 155 comporte une association de façon automatique de chaque premier point d'intérêt P1 sélectionné à un ou plusieurs premier(s) point(s) d'intérêt additionnel(s) P1'.

L'association automatique peut être exécuté par le troisième module logiciel 30 ou au moyen d'un module logiciel additionnel proprement configuré à cet effet et installé par exemple sur le dispositif électronique 15.

En variante, l'étape 155 comporte les sous-étapes suivantes :
- 157 : générer une liste des premiers points d'intérêt P1 créés ;
- 159 : sélectionner un premier point d'intérêt P1 dans la liste générée et lui associer manuellement un ou plusieurs premier(s) point(s) d'intérêt additionnel(s) P1'.

Par exemple, la liste générée peut être affichée sur l'écran 16 du dispositif électronique 15 et un opérateur peut exécuter d'abord la sélection et ensuite l'association désirée, à l'aide du module logiciel 30 ou utilisant un module logiciel proprement configuré à cet effet.

Cette sélection peut être répétée plusieurs fois pour chaque premier point d'intérêt P1 listé.

Le procédé 100 selon l'invention comporte au moins une étape 170 consistant à sauvegarder les résultats obtenus au moins à la fin de la sixième étape 160.

Selon des modes de réalisation possibles, il est également possible de sauvegarder les résultats obtenus pendant l'exécution d'une ou plusieurs des étapes décrites ci-dessus.

En effet, il est possible de sauvegarder les résultats partiels obtenus pendant l'exécution et/ou à la fin de la première étape 110, et/ou de la deuxième étape 120, et/ou de la troisième étape 130, et/ou de la quatrième étape 140, et/ou de la cinquième étape 150, et/ou de la sixième étape 160, avant de sauvegarder les résultats finalement obtenus à la fin de la sixième étape 160.

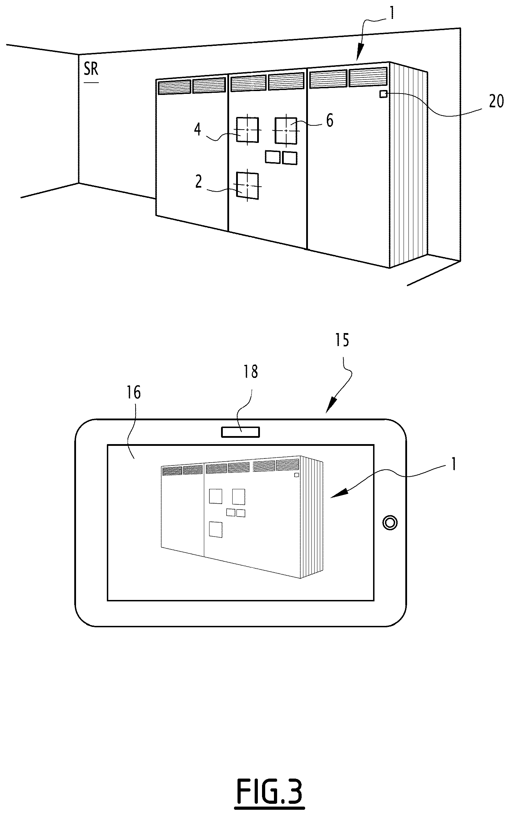

Les résultats partiels et/ou définitifs peuvent être sauvegardés dans l'unité de mémorisation de données 19 et / ou dans un serveur de réalité augmentée représenté sur la figure 2 et indiqué avec le numéro de référence 25. Ce serveur de réalité augmentée contient la base de données 10.Selon une forme possible de réalisation du procédé 100, quand un opérateur intervient sur le site réel SR où l'équipement 1 est installé, comme représenté sur la figure 3, il peut encadrer ou filmer l'équipement 1, par exemple avec l'appareil photo et/ou vidéo 18 intégré dans le dispositif électronique 15 et il peut déclencher sur ce dispositif 15 une application AR 27 pour visualiser en réalité augmentée les informations relatives à cet équipement 1.

A cet effet, s'ils sont stockés par exemple dans le serveur 25, les résultats relatifs à la configuration exécutée pour l'équipement 1 au cours des étapes 100 à 160, peuvent être demandés par les moyens de communication 21 et téléchargés pour affichage sur l'écran 16.

Alternativement, si les résultats de la configuration sont stockés dans l'unité de mémorisation 19, ils peuvent être chargés au sein du dispositif électronique 15 de manière directe.

Ensuite, le procédé 100 selon l'invention comporte les étapes suivantes :
- 175 : afficher sur l'écran 16 du dispositif électronique 15 utilisé par l'opérateur qui intervient sur le site réel SR, au moins un premier document, ou une première partie sélectionnée d'un premier document, par exemple le document D1 ;
- 180 : sélectionner manuellement sur l'écran 16 un premier point d'intérêt P1 superposé sur le premier document D1 ou sur la première partie sélectionnée du premier document;
- 190 : au moyen du dispositif électronique 15, projeter directement sur l'équipement 1 au moins un deuxième point d'intérêt P2 qui est associé au premier point d'intérêt P1 sélectionné.

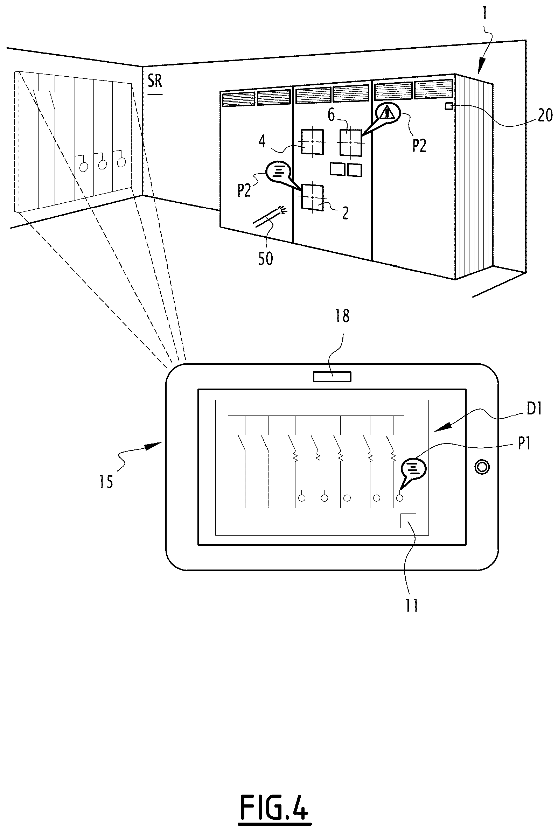

De cette façon, comme représenté sur la figure 4, au moins un deuxième point d'intérêt P2 est affiché et superposé directement sur l'armoire 1, par exemple au niveau du disjoncteur 2, alors que le premier point d'intérêt P1 associé est superposé sur le document D1 affiché sur l'écran 16, le document D1 portant des informations pertinentes relatives au disjoncteur 2.

En outre, dans le procédé 100 selon l'invention, le lien bidirectionnel créé entre ces deux points d'intérêt P1 et P2 est visuellement mis en évidence, comme illustré sur la figure 4, par l'affichage d'un pointeur virtuel 50 en face de l'équipement 1.

Dans l'exemple illustré sur la figure 4, un autre deuxième point d'intérêt P2 est illustré et affichée sur l'armoire 1, par exemple en correspondance du disjoncteur 6.

Si l'opérateur touche cet autre deuxième point d'intérêt P2, et si cet autre deuxième point d'intérêt P2 avait été lié pendant l'étape 160 à un premier d'intérêt P1 différent de celui affiché sur le document D1, grâce au lien établi pendant l'étape 160, ce premier point d'intérêt P1 différent est affiché sur l'écran 16.

Ce point d'intérêt P1 différent peut être associé à des informations pertinentes pour le disjoncteur 6 qui sont portées par le même document D1, déjà affiché sur l'écran, ou par un autre document et, dans ce dernier cas, cet autre document est également affiché sur l'écran 16.

Selon un mode de réalisation possible, dans le cas où plusieurs points d'intérêt sont liés entre eux, des filtrages propres ou une priorisation de ces points d'intérêt sont possibles en fonction par exemple du contexte et/ou du profil de l'utilisateur.

Selon un mode de réalisation possible, le procédé 100 comporte, en outre, une étape 195 consistant à projeter sur une surface du site réel SR, par exemple un mur, une image 3D en réalité augmentée schématiquement représentée sur la figure 4 avec le numéro de référence 60. L'image 60 correspond au document ou à la partie sélectionnée d'un document affiché(e) sur l'écran 16 du dispositif électronique 15.

Les images 3D en réalité augmentée des documents stockés dans la base de données 10 peuvent être générées au moyen d'un autre module logiciel configuré à cet effet avec des instructions logicielles.

Cet autre module logiciel peut être installé dans le dispositif électronique 15 et est indiqué schématiquement avec le numéro de référence 32 dans l'exemple de la figure 2.

Il ressort clairement de la description qui précède que le procédé 100, ainsi que le produit programme d'ordinateur et le dispositif électronique 15 correspondants, permettent d'atteindre le but à la base de la présente invention.

En effet, selon l'invention, un opérateur est toujours dirigé rapidement et de manière directe vers le document ou à la partie spécifique du document portant les informations pertinentes et non juste au début d'un document.

En outre, les informations sont liées entre elles, selon une ramification qui guide un opérateur d'un document ou d'une partie d'un document à une autre partie du même document ou à un autre document, sans aucun effort.

Les points d'intérêt qui permettent d'accéder aux informations sont affichés de façon très claire sur l'écran du dispositif électronique, ainsi que directement sur l'équipement, et des liens opérationnels sont créés entre points d'intérêt, de manière que les possibilités d'erreurs sont minimisées.

Ces résultats sont obtenus avec une solution relativement simple à réaliser et très flexible à appliquer.

Le procédé 100, le produit programme d'ordinateur et le dispositif électronique 15 ainsi conçus sont susceptibles de modifications et de variations. Par exemple, le dispositif électronique utilisé peut être un casque habituellement utilisé pour jouer en réalité augmentée qui est équipé de l'écran 16, ou des lunettes dont chaque verre forme ou est remplacé par un écran. S'il est utilisé, le serveur 25 de réalité augmentée peut être installé à distance ou dans le dispositif électronique 15. Les modules logiciels avec leur instructions logicielles correspondantes peuvent être stockés dans le dispositif électronique 15 ou répartis parmi des unités de stockage distinctes et distantes entre elles.

Tous les aménagements peuvent en outre être remplacés par des éléments techniquement équivalents.

## Revendications

1. Procédé (100) pour la configuration et l'affichage en réalité augmentée ou mixte ou étendue des informations relatives à au moins un équipement (1) installé dans un site réel (SR), le procédé (100) comprenant au moins les étapes suivantes :
- (110) : construire une base de données (10) comprenant une pluralité de documents (D1, D2, D3) qui portent des informations relatives à l'équipement (1), dans laquelle chaque document ou chaque partie sélectionnée d'un document inclus dans la base de données (10) est associé(e) à au moins une étiquette électronique correspondante (11) qui contient une adresse renvoyant vers le document ou vers la partie sélectionnée du document lui associé(e) ;
- (120) : identifier de manière univoque l'équipement (1) installé dans le site réel (SR) ;
- (130) : associer l'équipement (1) ainsi identifié à au moins une étiquette électronique (11) associée à un document (D1, D2, D3) ou à une partie sélectionnée d'un document ;
- (140) : créer un ou plusieurs premier(s) point(s) d'intérêt (P1) lié(s) à au moins une étiquette électronique, chaque premier point d'intérêt (P1) étant configuré pour être superposé sur un premier document (D1) ou sur une première partie sélectionnée d'un document correspondant ; le procédé (100) étant **caractérisé en ce qu'**il comporte en outre les étapes suivantes :
- (150) : créer un ou plusieurs deuxième(s) point(s) d'intérêt (P2) à afficher superposé(s) directement sur l'équipement (1) installé dans le site réel (SR) ; et
- (160) : associer un deuxième point d'intérêt (P2) à au moins un premier point d'intérêt (P1).

2. Procédé (100) selon la revendication 1, comprenant en outre l'étape suivante :
- (155) : associer au moins un premier point d'intérêt (P1) à un ou plusieurs premier(s) point(s) d'intérêt additionnel(s) (P1'), chaque premier point d'intérêt additionnel (P1') étant lié à, et configuré pour, être superposé sur un deuxième document (D2) différent du premier document (D1) ou sur une deuxième partie du premier document différente de la première partie.

3. Procédé (100) selon la revendication 2, dans lequel l'étape (155) consistant à associer au moins un premier point d'intérêt (P1) à un ou plusieurs premier(s) point(s) d'intérêt additionnel(s) (P1') comporte le fait d'associer de façon automatique au moyen d'un premier module logiciel (30) chaque premier point d'intérêt (P1) sélectionné à un ou plusieurs premier(s) point(s) d'intérêt additionnel(s) (P1').

4. Procédé (100) selon la revendication 2, dans lequel l'étape (155) consistant à associer au moins un premier point d'intérêt (P1) à un ou plusieurs premier(s) point(s) d'intérêt additionnel(s) (P1') comporte les sous-étapes suivantes :
- (157) : générer une liste des premiers points d'intérêt (P1) créés ;
- (159) : sélectionner dans la liste générée un premier point d'intérêt (P1) et lui associer manuellement un ou plusieurs premier(s) point(s) d'intérêt additionnel(s) (P1').

5. Procédé (100) selon l'une quelconque des revendications précédentes, dans lequel l'étape (120) consistant à identifier de manière univoque l'équipement (1) installé dans le site réel (SR) comporte le fait de détecter au moins un marqueur (20) apposé sur l'équipement (1), le marqueur (20) identifiant de manière univoque l'équipement (1) sur lequel il est apposé.

6. Procédé (100) selon l'une quelconque des revendications précédentes, comprenant en outre au moins une étape (170) consistant à sauvegarder les résultats obtenus au moins à la fin de l'étape (160) consistant à associer un deuxième point d'intérêt (P2) à au moins un premier point d'intérêt (P1).

7. Procédé (100) selon l'une quelconque des revendications précédentes, comportant en outre les étapes suivantes :
- (175) : afficher sur un écran (16) d'un dispositif électronique (15) utilisé par un operateur intervenant sur le site réel (SR) où l'équipement (1) est installé, au moins un premier document (D1) ou une première partie sélectionnée d'un premier document;
- (180) : sélectionner manuellement sur l'écran (16) un premier point d'intérêt (P1) superposé sur le premier document (D1) ou sur la première partie sélectionnée du premier document;
- (190): au moyen du dispositif électronique (15), projeter directement sur l'équipement (1) au moins un deuxième point d'intérêt (P2) qui est lié de manière univoque au premier point d'intérêt (P1) sélectionné.

8. Procédé (100) selon la revendication 6, comportant, en outre, une étape (195) consistant à projeter sur une surface du site réel (SR) une image tridimensionnelle (60) en réalité augmentée du premier document (D1) ou de la première partie sélectionnée du premier document affiché(e) sur l'écran (16) du dispositif électronique (15).

9. Procédé (100) selon l'une quelconque des revendications précédentes, dans lequel l'étape (110) consistant à construire une base de données (10) comporte au moins la sous-étape suivante :
- (112): sélectionner pour chaque document (D1, D2, D3) ou chaque partie sélectionnée d'un document un élément d'identification (11) apposé sur ce document, qui identifie de manière univoque le document ou la partie sélectionnée du document correspondant(e).

10. Procédé (100) selon la revendication 9, dans lequel la sous-étape (112) consistant à sélectionner pour chaque document (D1, D2, D3) ou chaque partie sélectionnée d'un document un élément d'identification (11) comporte le fait d'analyser, de façon automatique, chaque document ou chaque partie sélectionnée d'un document au moyen d'un module logiciel (22) d'intelligence artificielle à apprentissage profond ou à apprentissage machine.

11. Procédé (100) selon la revendication 5, dans lequel le fait de détecter au moins un marqueur (20) apposé sur l'équipement (1), comporte le fait d'identifier au moins une image au moyen d'un système optique de reconnaissance d'images (24).

12. Procédé (100) selon la revendication 5, dans lequel le fait de détecter au moins un marqueur (20) apposé sur l'équipement (1) comporte le fait d'identifier au moins une inscription textuelle avec un système optique de reconnaissance de caractères (26).

13. Procédé (100) selon l'une quelconque des revendications précédentes, dans lequel l'étape (130) consistant à associer l'équipement (1) identifié à au moins une étiquette électronique (11) comporte le fait d'associer automatiquement l'équipement (1) à une ou plusieurs étiquette(s) électronique(s) au moyen d'un module logiciel (28) installé dans un dispositif électronique (15).

14. Procédé (100) selon l'une quelconque des revendications précédentes, dans lequel l'étape (130) consistant à associer l'équipement (1) identifié à au moins une étiquette électronique (11) comporte le fait d'associer manuellement sur un écran (16) d'un dispositif électronique (15) à l'aide d'un module logiciel l'équipement (1) à une ou plusieurs étiquette(s) électronique(s).

15. Procédé (100) selon la revendication 5, dans lequel le marqueur (20) apposé sur l'équipement (1) inclut des coordonnées indicatives de la position d'installation de l'équipement (1) dans le site réel (SR), le marqueur (20) étant un élément sélectionné parmi le groupe comprenant un code QR, une étiquette RFID et un code à barres.

16. Produit programme d'ordinateur comportant des instructions logicielles qui, lorsque mises en œuvre par une unité de traitement d'informations (17) intégrée à un dispositif électronique (15), met en œuvre le procédé (100) selon l'une quelconque des revendications précédentes.

17. Dispositif électronique (15) **caractérisé en ce qu'**il comporte au moins une unité de traitement d'informations (17) et une unité de mémorisation de données (19) comportant des instructions logicielles qui, lorsque mises en œuvre par l'unité de traitement d'informations (17) comporte l'exécution d'un procédé (100) selon l'une quelconque des revendications de 1 à 15.

## Patentansprüche

1. Verfahren (100) zur Konfiguration und Anzeige von Informationen in Augmented, Mixed oder Extended Reality in Bezug auf mindestens eine Ausrüstung (1), die an einem realen Standort (SR) installiert ist, das Verfahren (100) umfassend mindestens die folgenden Schritte:
- (110): Erstellen einer Datenbank (10), umfassend eine Vielzahl von Dokumenten (D1, D2, D3), die Informationen in Bezug auf die Ausrüstung (1) tragen, wobei jedes Dokument oder jeder ausgewählte Teil eines Dokuments, das/der in der Datenbank (10) enthalten ist, mit mindestens einem entsprechenden elektronischen Etikett (11) assoziiert ist, das eine Adresse enthält, die auf das Dokument oder den ausgewählten Teil des Dokuments verweist, das/der damit assoziiert ist;
- (120): eindeutiges Identifizieren der Ausrüstung (1), die an dem realen Standort (SR) installiert ist;
- (130): Assoziieren der somit identifizierten Ausrüstung (1) mit mindestens einem elektronischen Etikett (11), das mit einem Dokument (D1, D2, D3) oder einem ausgewählten Teil eines Dokuments assoziiert ist;
- (140): Erzeugen eines oder mehrerer erster Punkte von Interesse (P1), die mit mindestens einem elektronischen Etikett assoziiert sind, wobei jeder erste Punkt von Interesse (P1) konfiguriert ist, um über ein erstes Dokument (D1) oder einen ersten ausgewählten Teil eines entsprechenden Dokuments gelegt zu werden; wobei das Verfahren (100) **dadurch gekennzeichnet ist, dass** es ferner die folgenden Schritte umfasst:
- (150): Erstellen eines oder mehrerer zweiter POIs (P2) zur Anzeige, die direkt über die Ausrüstung (1) gelegt werden, die an dem realen Ort (SR) installiert ist; und
- (160): Assoziieren eines zweiten Punkts von Interesse (P2) mit mindestens einem ersten Punkt von Interesse (P1).

2. Verfahren (100) nach Pattenanspruch 1, ferner umfassend den folgenden Schritt:
- (155): Assoziieren mindestens eines ersten Punkts von Interesse (P1) mit einem oder mehreren zusätzlichen ersten Punkten von Interesse (P1'), wobei jeder zusätzliche erste Punkt von Interesse (P1') mit einem zweiten Dokument (D2), das sich von dem ersten Dokument (D1) unterscheidet, oder einem zweiten Teil des ersten Dokuments, der sich von dem ersten Teil unterscheidet, verbunden und konfiguriert ist, um darüber gelegt zu werden.

3. Verfahren (100) nach Pattenanspruch 2, wobei der Schritt (155), der darin besteht, mindestens einen ersten Punkt von Interesse (P1) mit einem oder mehreren zusätzlichen ersten Punkten von Interesse (P1') zu assoziieren, den Umstand umfasst, jeden ausgewählten ersten Punkt von Interesse (P1) mittels eines ersten Softwaremoduls (30) automatisch mit einem oder mehreren zusätzlichen ersten Punkten von Interesse (P1') zu assoziieren.

4. Verfahren (100) nach Anspruch 2, wobei der Schritt (155), der darin besteht, mindestens einen ersten Punkt von Interesse (P1) mit einem oder mehreren zusätzlichen ersten Punkten von Interesse (P1') zu assoziieren, die folgenden Teilschritte umfasst:
- (157): Erzeugen einer Liste der erstellten ersten Punkte von Interesse (P1);
- (159): Auswählen, aus der erzeugten Liste eines ersten Punkts von Interesse (P1) und ihn manuell Assoziieren mit einem oder mehreren zusätzlichen erste Punkten von Interesse (P1').

5. Verfahren (100) nach einem der vorherigen Ansprüche, wobei der Schritt (120), der darin besteht, die an dem realen Standort (SR) installierte Ausrüstung (1) eindeutig zu identifizieren, den Umstand umfasst, mindestens eine an der Ausrüstung (1) angebrachte Markierung (20) zu erkennen, wobei die Markierung (20) die Ausrüstung (1), an der sie angebracht ist, eindeutig identifiziert.

6. Verfahren (100) nach einem der vorherigen Pattenanspruch, ferner umfassend mindestens einen Schritt (170), der darin besteht, die Ergebnisse zu speichern, die mindestens am Ende des Schritts (160) erlangt werden, der darin besteht, einen zweiten Punkt von Interesse (P2) mit mindestens einem ersten Punkt von Interesse (P1) zu assoziieren.

7. Verfahren (100) nach einem der vorherigen Pattenansprüche, ferner umfassend die folgenden Schritte:
- (175): Anzeigen auf einem Bildschirm (16) einer elektronischen Vorrichtung (15), die von einem Bediener verwendet wird, der an dem realen Standort (SR) tätig ist, an dem die Ausrüstung (1) installiert ist, mindestens eines ersten Dokuments (D1) oder eines ersten ausgewählten Teils eines ersten Dokuments;
- (180): manuelles Auswählen auf dem Bildschirm (16) eines ersten Punkts von Interesse (P1), der über das erste Dokument (D1) oder über den ersten ausgewählten Teil des ersten Dokuments gelegt wird;
- (190): mittels der elektronischen Vorrichtung (15), Projizieren mindestens eines zweiten Punkts von Interesse (P2), der eindeutig mit dem ausgewählten ersten Punkt von Interesse (P1) verbunden ist, direkt auf die Ausrüstung (1).

8. Verfahren (100) nach Pattenanspruch 6, ferner umfassend einen Schritt (195), der darin besteht, auf eine Oberfläche des realen Standorts (SR) ein dreidimensionales Bild (60) der Augmented Reality des ersten Dokuments (D1) oder des ersten ausgewählten Teils des ersten Dokuments zu projizieren, das auf dem Bildschirm (16) der elektronischen Vorrichtung (15) angezeigt wird.

9. Verfahren (100) nach einem der vorherigen Pattenansprüche, wobei der Schritt (110), der darin besteht, eine Datenbank (10) aufzubauen, mindestens den folgenden Teilschritt umfasst:
- (112): Auswählen, für jedes Dokument (D1, D2, D3) oder jeden ausgewählten Teil eines Dokuments, eines an diesem Dokument angebrachtes Identifizierungselements (11), das das Dokument oder den ausgewählten Teil des entsprechenden Dokuments eindeutig identifiziert.

10. Verfahren (100) nach Pattenanspruch 9, wobei der Teilschritt (112), der darin besteht, für jedes Dokument (D1, D2, D3) oder jeden ausgewählten Teil eines Dokuments ein Identifizierungselements (11) auszuwählen, das den Umstand umfasst, jedes Dokument oder jeden ausgewählten Teil eines Dokuments mittels eines Softwaremoduls (22) für künstliche Intelligenz mit Deep Learning oder maschinellem Lernen automatisch zu analysieren.

11. Verfahren (100) nach Pattenanspruch 5, wobei der Umstand, mindestens eine Markierung (20) zu erfassen, die an der Ausrüstung (1) angebracht ist, ein Identifizieren mindestens eines Bilds mittels eines optischen Bilderkennungssystems (24) umfasst.

12. Verfahren (100) nach Anspruch 5, wobei der Umstand, mindestens eines an der Ausrüstung (1) angebrachte Markierung (20) zu erfassen, ein Identifizieren mindestens einer Textinschrift mit einem optischen Zeichenerkennungssystem (26) umfasst.

13. Verfahren (100) nach einem der vorherigen Pattenansprüche, wobei der Schritt (130), der darin besteht, die identifizierte Ausrüstung (1) mit mindestens einem elektronischen Etikett (11) zu assoziieren, den Umstand umfasst, die Ausrüstung (1) automatisch mit einem oder mehreren elektronischen Etiketten mittels eines Softwaremoduls (28) zu assoziieren, das in einer elektronischen Vorrichtung (15) installiert ist.

14. Verfahren (100) nach einem der vorherigen Pattenansprüche, wobei der Schritt (130), der darin besteht, die identifizierte Ausrüstung (1) mit mindestens einem elektronischen Etikett (11) zu assoziieren, den Umstand umfasst, die Ausrüstung (1) manuell mittels eines Softwaremoduls mit einem oder mehreren elektronischen Etiketten auf einem Bildschirm (16) einer elektronischen Vorrichtung (15) zu assoziieren.

15. Verfahren (100) nach Anspruch 5, wobei die an der Ausrüstung (1) angebrachte Markierung (20) Koordinaten beinhaltet, die indikativ für die Einbaulage der Ausrüstung (1) an dem realen Standort (SR) sind, wobei die Markierung (20) ein Element ist, das ausgewählt ist aus der Gruppe, bestehend aus einem QR-Code, einem RFID-Tag und einem Barcode.

16. Computerprogrammprodukt, umfassend Softwareanweisungen, die, wenn sie von einer Informationsverarbeitungseinheit (17) implementiert werden, die in eine elektronische Vorrichtung (15) integriert ist, das Verfahren (100) nach einem der vorherigen Pattenansprüche implementieren.

17. Elektronische Vorrichtung (15), **dadurch gekennzeichnet, dass** sie mindestens eine Informationsverarbeitungseinheit (17) und eine Datenspeichereinheit (19) umfasst, umfassend Softwareanweisungen umfasst, die, wenn sie von der Informationsverarbeitungseinheit (17) implementiert werden, die Ausführung eines Verfahrens (100) nach einem der Pattenansprüche von 1 bis 15 umfassen.

## Claims

1. A method (100) for the configuration and display in augmented or mixed or extended reality of information relating to at least one piece of equipment (1) installed in a real site (SR), the method (100) comprising at least the following steps:
- (110): constructing a database (10) comprising a plurality of documents (D1, D2, D3) which carry information relating to the equipment (1), wherein each document or each selected part of a document included in the database (10) is associated with at least one corresponding electronic tag (11) which contains an address referring to the document or to the selected part of the document associated with it;
- (120): uniquely identifying the equipment (1) installed in the real site (SR);
- (130): associating the equipment (1) thus identified with at least one electronic tag (11) associated with a document (D1, D2, D3) or with a selected part of a document;
- (140): creating one or more first points of interest (P1) linked to at least one electronic label, each first point of interest (P1) being configured to be superimposed on a first document (D1) or on a first selected part of a corresponding document; the method (100) being **characterised in that** it further comprises the following steps:
- (150): creating one or more second points of interest (P2) to be displayed superimposed directly on the equipment (1) installed in the real site (SR); and
- (160): associating a second point of interest (P2) with at least one first point of interest (P1).

2. The method (100) according to claim 1, further comprising the following step:
- (155): associating at least one first point of interest (P1) with one or more additional first points of interest (P1'), each additional first point of interest (P1') being linked to, and configured so as to be superimposed on, a second document (D2) different from the first document (D1) or on a second part of the first document different from the first part.

3. The method (100) according to claim 2, wherein the step (155) consisting in associating at least one first point of interest (P1) with one or more additional first points of interest (P1') comprises automatically associating, by means of a first software module (30), each first point of interest (P1) selected with one or more additional first points of interest (P1').

4. The method (100) according to claim 2, wherein the step (155) of associating at least a first point of interest (P1) with one or more additional first points of interest (P1') comprises the following sub-steps:
- (157): generating a list of the first points of interest (P1) created;
- (159): selecting a first point of interest (P1) from the list generated and manually associating one or more additional first points of interest (P1') with it.

5. The method (100) according to any one of the preceding claims, wherein the step (120) of uniquely identifying the equipment (1) installed in the real site (SR) comprises detecting at least one marker (20) affixed to the equipment (1), the marker (20) uniquely identifying the equipment (1) to which it is affixed.

6. The method (100) according to any one of the preceding claims, further comprising at least one step (170) consisting in saving the results obtained at least at the end of the step (160) consisting in associating a second point of interest (P2) with at least one first point of interest (P1).

7. The method (100) according to any one of the preceding claims, further comprising the following steps:
- (175): displaying on a screen (16) of an electronic device (15) used by an operator working on the real site (SR) where the equipment (1) is installed, at least one first document (D1) or a first selected part of a first document;
- (180): manually select on the screen (16) a first point of interest (P1) superimposed on the first document (D1) or on the first selected part of the first document;
- (190): by means of the electronic device (15), project directly onto the equipment (1) at least one second point of interest (P2) which is uniquely linked to the first point of interest (P1) selected.

8. The method (100) according to claim 6, further comprising a step (195) consisting in projecting onto a surface of the real site (SR) a three-dimensional augmented reality image (60) of the first document (D1) or of the first selected part of the first document displayed on the screen (16) of the electronic device (15).

9. The method (100) according to any one of the preceding claims, in which the step (110) consisting in constructing a database (10) comprises at least the following sub-step:
- (112): selecting for each document (D1, D2, D3) or each selected part of a document an identification element (11) affixed to this document, which uniquely identifies the document or the selected part of the corresponding document.

10. The method (100) according to claim 9, wherein the sub-step (112) of selecting for each document (D1, D2, D3) or each selected part of a document an identification element (11) comprises automatically analysing each document or each selected part of a document by means of an artificial intelligence software module (22) employing deep learning or machine learning.

11. The method (100) according to claim 5, wherein detecting at least one marker (20) affixed to the equipment (1) comprises identifying at least one image by means of an optical image recognition system (24).

12. The method (100) according to claim 5, wherein detecting at least one marker (20) affixed to the equipment (1) comprises identifying at least one textual inscription with an optical character recognition system (26).

13. The method (100) according to any one of the preceding claims, wherein the step (130) consisting in associating the identified equipment (1) with at least one electronic tag (11) comprises automatically associating the equipment (1) with one or more electronic tags by means of a software module (28) installed in an electronic device (15).

14. The method (100) according to any one of the preceding claims, wherein the step (130) consisting in associating the identified equipment (1) with at least one electronic tag (11) comprises manually associating the equipment (1) with one or more electronic tags on a screen (16) of an electronic device (15) using a software module.

15. The method (100) according to claim 5, wherein the marker (20) affixed to the equipment (1) includes coordinates indicative of the installation position of the equipment (1) in the real site (SR), the marker (20) being an element selected from the group comprising a QR code, an RFID tag and a bar code.

16. The computer program product comprising software instructions which, when implemented by an information processing unit (17) integrated into an electronic device (15), implements the method (100) according to any one of the preceding claims.

17. An electronic device (15) **characterised in that** it comprises at least one information processing unit (17) and a data storage unit (19) comprising software instructions which, when implemented by the information processing unit (17), comprise the execution of a method (100) according to any one of claims 1 to 15.
